# FASCICULE DE BREVET EUROPEEN

(11) **EP 3 181 991 B1**
(45) Date de publication et mention de la délivrance du brevet: **27.07.2022**
(21) Numéro de dépôt: 16201856.8
(22) Date de dépôt: 02.12.2016
(51) Int. Cl.: F21S 41/148, F21S 41/153, F21S 41/36, F21S 41/663

(54) **MODULE D'ECLAIRAGE AUTOMOBILE AVEC FONCTIONS CODE ET ROUTE COMBINEES ET UNE SOURCE LUMINEUSE AJUSTABLE**
KRAFTFAHRZEUG-BELEUCHTUNGSMODUL MIT KOMBINERTER ABBLEND- UND FERNLICHTFUNKTION UND EINER REGULIERBAREN LICHTQUELLE
AUTOMOTIVE LIGHTING MODULE WITH COMBINED CODE AND ROAD FUNCTIONS AND AN ADJUSTABLE LIGHT SOURCE

(30) Priorité: 10.12.2015 FR 1562118
(43) Date de publication de la demande: 21.06.2017
(73) Titulaire: VALEO VISION, 93012 Bobigny Cedex (FR)
(72) Inventeur: DE LAMBERTERIE, Antoine, 75019 PARIS (FR); MEYRENAUD, Jean-Luc, 93190 LIVRY GARGAN (FR)
(74) Mandataire: Valeo Visibility

(56) Documents cités:
- EP-A2- 2 058 585
- EP-A2- 2 159 479
- DE-A1-102011 087 309
- FR-A1- 2 944 578
- FR-A1- 2 989 647
- JP-A- 2006 134 810
- JP-A- 2011 124 100
- US-A1- 2008 055 896
- US-A1- 2014 098 517

## Description

L'invention a trait au domaine de l'éclairage, notamment pour véhicule automobile. Plus particulièrement, l'invention a trait au domaine des projecteurs pour véhicule automobile.

Le document de brevet publié US 2005/0068787 A1 divulgue un module d'éclairage comprenant deux systèmes optiques disposés de manière opposée. Chacun de ces deux systèmes optiques comprend, essentiellement, une source lumineuse et une surface réfléchissante. Ces deux sources lumineuses sont disposées sur deux faces opposées d'un support commun. Chacune des surfaces réfléchissantes est une surface de révolution dans un demi-espace délimité par le support commun. Les deux surfaces réfléchissantes forment ainsi deux demi-coquilles opposées l'une à l'autre. Un des deux systèmes optiques est configuré pour former un faisceau d'éclairage à coupure horizontale, correspondant à un faisceau dit « code » (en anglais « low-beam »). Pour ce faire, le module comprend une surface réfléchissante avec un bord dit de « coupure » situé au niveau d'un foyer de la surface réfléchissante. Les rayons rencontrant la surface en question à l'arrière du bord de coupure sont réfléchis vers une partie supérieure d'une lentille de projection alors que ceux passant à l'avant du bord en question ne sont pas déviés et rencontrent une partie inférieure de la lentille en question. Ce phénomène assure une coupure, essentiellement horizontale, du faisceau. L'autre des deux systèmes optiques fonctionne essentiellement de la même manière, à cette différence près que sa configuration est symétrique à celle du premier système. Le faisceau produit par le deuxième système optique est combiné avec celui du premier système pour produire un faisceau d'éclairage du type « route » (en anglais « high-beam »), c'est-à-dire un faisceau sans coupure horizontale. Cette configuration est intéressante en ce qu'elle exploite le faisceau à coupure pour produire un faisceau du type « route ». Elle peut toutefois présenter des difficultés de photométrie dans la partie inférieure du faisceau du type « route », compte tenu qu'elle est assurée essentiellement par le faisceau à coupure du type « code ».

Le document de brevet publié US 2007/0279924 A1 divulgue un module d'éclairage pour véhicule automobile, comprenant une source lumineuse avec plusieurs zones lumineuses aptes à être alimentées séparément. Il comprend également une surface réfléchissante formant une demi-coquille, similairement aux surfaces réfléchissantes de l'enseignement précédent. L'image produite avec le faisceau d'éclairage varie en fonction des zones lumineuses qui sont alimentées. Un faisceau limité verticalement et étalé horizontalement peut être produit ainsi qu'un faisceau plus étendu verticalement et plus limité horizontalement. Cet enseignement est intéressant en ce que la forme du faisceau peut être modulée par la source lumineuse.

Le document FR2989647 A1 montre un bloc optique de véhicule comprenant des première et seconde sources permettant de réaliser soit une fonction de feu de croisement, soit une fonction de feu de route. Les sources comprennent une ou plusieurs diodes électroluminescentes. L'intensité lumineuse produite par chaque source peut être variée, notamment en faisant varier l'intensité du courant d'alimentation des LEDs.

L'invention a pour objectif de pallier au moins un des inconvénients de l'état de l'art, en particulier de l'état de l'art susmentionné. Plus particulièrement, l'invention a pour objectif de proposer un module d'éclairage performant apte à produire un faisceau à coupure et, en combinaison avec le faisceau à coupure, un faisceau sans coupure. L'invention a pour objet un module d'éclairage pour véhicule automobile, comprenant: un axe optique ; un premier système optique avec au moins une première source lumineuse, ledit système étant configuré pour former un premier faisceau d'éclairage suivant l'axe optique, à coupure horizontale ; un deuxième système optique avec au moins une deuxième source lumineuse, ledit système étant configuré pour produire, en combinaison avec le premier système optique, un deuxième faisceau d'éclairage suivant l'axe optique, verticalement plus étendu que le premier faisceau ; remarquable en ce que la ou les premières sources lumineuses présentent une puissance d'éclairage variable entre un niveau haut et un niveau bas, le premier faisceau étant réalisé au niveau bas de puissance d'éclairage et le deuxième faisceau étant réalisé au niveau haut.

Le premier faisceau est avantageusement un faisceau dit « code » (en anglais low-beam »). Le deuxième faisceau est avantageusement un faisceau dit « route » (en anglais « high-beam »).

La variation de puissance d'éclairage de la ou des premières sources lumineuses peut être réalisée par une variation du courant d'alimentation électrique de ladite ou desdites sources et/ou par une alimentation sélective de zones lumineuses de ladite ou desdites sources.

Selon l'invention, la ou chacune des premières sources lumineuses comprend au moins une zone lumineuse principale et au moins une zone lumineuse auxiliaire, lesdites zones principale(s) et auxiliaire(s) étant aptes à être alimentées électriquement séparément, le niveau bas de puissance d'éclairage étant réalisé par l'alimentation de la ou des zones principales uniquement et le niveau haut de puissance étant réalisé par l'alimentation des zones principale(s) et auxiliaire(s).

Selon un mode avantageux de l'invention, les zones lumineuses principale(s) et auxiliaire(s) de la ou de chacune des premières sources lumineuses sont disposées sur un même composant.

Selon un mode avantageux de l'invention, les zones lumineuses principale(s) et auxiliaire(s) de la ou de chacune des premières sources lumineuses sont disposées sur plusieurs composants.

Selon l'invention, la ou les zones lumineuses auxiliaires de la ou de chacune des premières sources lumineuses sont disposées, suivant l'axe optique, à l'avant de la ou des zones lumineuses principales. La notion « avant » est à comprendre dans le sens général de parcours de rayons lumineux.

Selon un mode avantageux de l'invention, le niveau haut de puissance d'éclairage est supérieur ou égal à 150% du niveau bas.

Selon un mode avantageux de l'invention, le deuxième faisceau présente un flux lumineux moyen dans une zone qui est supérieur ou égal à 150% du flux lumineux moyen du premier faisceau dans la zone, ladite zone étant située sous l'axe optique. La zone en question peut s'étendre verticalement sur 3% de pente vers le bas à compter de l'axe optique et/ou horizontalement sur 10% de pente de part et d'autre de l'axe optique.

Selon un mode avantageux de l'invention, la ou les premières sources lumineuses sont disposées de manière à éclairer dans une première direction, la ou les deuxièmes sources lumineuses étant disposées de manière à éclairer dans une deuxième direction opposée à la première direction.

Selon un mode avantageux de l'invention, la ou les premières sources lumineuses et la ou les deuxièmes sources lumineuses sur disposées sur des faces opposées d'un support commun.

Selon un mode avantageux de l'invention, chacun du premier et deuxième système optique comprend une surface réfléchissante apte à réfléchir les rayons émis par la ou les premières et/ou deuxièmes sources lumineuses, respectivement, vers un bord de coupure situé sur l'axe optique du module.

Selon un mode avantageux de l'invention, la surface réfléchissante du premier et/ou du deuxième système optique présente une forme de demi-coquille, préférentiellement avec un profil elliptique.

Selon un mode avantageux de l'invention, le module comprend une unité électronique de contrôle des première(s) et deuxième(s) sources lumineuses, configurée pour alimenter la ou les premières sources lumineuses selon le niveau bas pour former le premier faisceau et pour alimenter ladite ou lesdites sources lumineuses selon le niveau haut et la ou les deuxièmes sources lumineuses pour former le deuxième faisceau.

Selon un mode avantageux de l'invention, les premières sources lumineuses sont au nombre de deux, disposées de part et d'autre, respectivement, de l'axe optique du module.

Selon un mode avantageux de l'invention, la surface réfléchissante du premier système optique comprend deux portions de surface de révolution suivant deux axes optiques dudit système optique, lesdits axes convergeant vers l'axe optique du module.

Selon un mode avantageux de l'invention, la ou les zones lumineuses principales de chacune des deux premières sources lumineuses sont centrées sur un des deux axes optiques du premier système optique, respectivement, et les zones lumineuses auxiliaires sont disposées latéralement audit axe optique correspondant, du côté de l'axe optique du module, et à l'avant des zones lumineuses principales.

Selon un mode avantageux de l'invention, les zones lumineuses principales de chacune des deux premières sources lumineuses sont alignées suivant une première direction perpendiculaire à l'axe optique correspondant du premier système optique.

Selon un mode avantageux de l'invention, les zones lumineuses auxiliaires de chacune des deux premières sources lumineuses sont alignées suivant une deuxième direction perpendiculaire à l'axe optique correspondant du premier système optique, ladite deuxième direction étant située à l'avant de la première direction perpendiculaire correspondante. La distance d entre les première et deuxième directions perpendiculaires peut être comprise entre 0.5 et 3 mm, préférentiellement entre 1 et 2 mm.

Selon un mode avantageux de l'invention, le module comprend une lentille configurée pour recevoir des rayons lumineux des premier et deuxième systèmes optiques en vue de former les premier et deuxième faisceaux.

L'invention peut également avoir pour objet un projecteur comprenant un module conforme à l'invention.

Les mesures de l'invention sont intéressantes en ce qu'elles permettent de réaliser, outre un premier faisceau à coupure, un deuxième faisceau sans coupure et avec un flux lumineux plus important, et ce grâce au premier système optique.

D'autres caractéristiques et avantages de la présente invention seront mieux compris à l'aide de la description et des dessins parmi lesquels :
- La figure 1 est un schéma de principe d'un module d'éclairage conforme à un premier mode de réalisation de l'invention ;
- La figure 2 illustre l'image d'un faisceau à coupure horizontale produit par le module de la figure 1 ;
- La figure 3 illustre l'image d'un faisceau sans coupure horizontale produit par le module de la figure 1 ;
- La figure 4 est une vue schématique en élévation des zones lumineuses supérieures du module de la figure 1 ;
- La figure 5 est une schématique en élévation des zones lumineuses supérieures d'un module d'éclairage selon un deuxième mode de réalisation de l'invention.

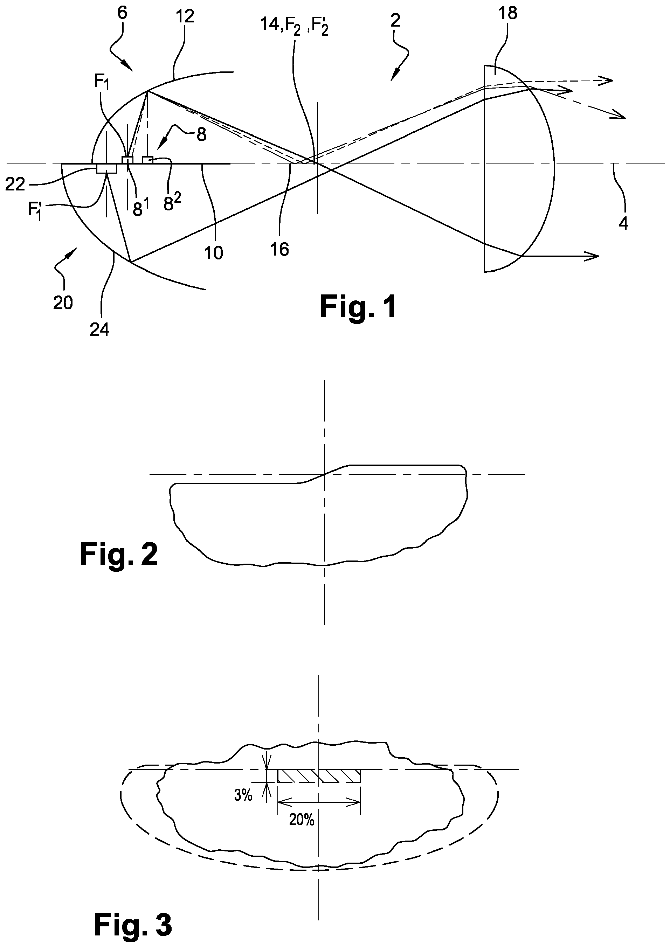

La figure 1 est une représentation schématique d'un module d'éclairage conforme à l'invention. Le module 2 comprend un axe optique 4, un premier système optique 6, un deuxième système optique 20 et une lentille 18. Les premier et deuxième systèmes optiques 6 et 20 sont opposés l'un à l'autre, de part et d'autre de l'axe optique 4.

Le premier système optique 6 comprend, essentiellement, une source lumineuse 8 disposée sur un support 10, et une surface réfléchissante 12. Celle-ci forme une demi-coquille dans le demi-espace délimité par le support 10. Ce dernier est avantageusement généralement plan. La surface réfléchissante 12 présente avantageusement un profil elliptique avec deux foyers F₁ et F₂, l'un (F₁) correspondant à l'emplacement de la source lumineuse 8 et l'autre (F₂) étant au niveau d'un bord de coupure 14 d'une surface réfléchissante 16.

Le deuxième système optique 20 comprend, essentiellement et similairement au premier système optique 6, une source lumineuse 22 disposée sur le support 10 qui est avantageusement commun avec la première source lumineuse 8, et une surface réfléchissante 24. Cette dernière forme une demi-coquille dans le demi-espace délimité par le support 10 et est avantageusement de profil elliptique avec deux foyers F₁^{'} et F₂^{'}, l'un (F₁^{'}) correspondant à l'emplacement de la source lumineuse 22 et l'autre (F₂) étant au niveau du bord de coupure 14 de la surface réfléchissante 16. Le foyer F₂^{'} du deuxième système optique 20 peut être confondu avec celui (F₂) du premier système optique 6.

Les surfaces réfléchissantes 12 et 24 des premier et deuxième systèmes optiques 6 et 20 peuvent être des surfaces de révolution, configurées pour réfléchir les rayons émis dans les deux demi-espaces délimités par le support 10 vers les foyers F₂ et F₂'.

En référence à la figure 1, on peut observer que la première source lumineuse 8 comprend plusieurs zones lumineuses 8¹ et 8² distinctes les unes des autres. En l'occurrence la ou les zones lumineuses principales 8¹ sont disposées au niveau du premier foyer F₁ alors que la ou les zones lumineuses auxiliaires 8² sont disposées en avant, suivant la direction de l'axe optique et le sens général de parcours des rayons, de la ou des zones 8¹ située(s) au foyer F₁.

Le fonctionnement du module est le suivant :
Lorsque la ou les zones lumineuses principales 8¹ de la source lumineuse 8 du premier système optique est/sont alimentées électriquement, les rayons produits sont essentiellement réfléchis vers le deuxième foyer F₂. Une partie des rayons passent directement à l'avant du bord de coupure 14 et rencontrent la moitié inférieure de la lentille 18. Ces rayons sont alors réfractés une première fois au passage du premier dioptre formé par la face arrière de la lentille et ensuite une deuxième fois au passage du deuxième dioptre formé par la face avant de ladite lentille. Ces rayons sont illustrés par le rayon représenté en trait continu à la figure 1. Une autre partie des rayons rencontrent la surface réfléchissante 16 à l'arrière du bord de coupure 14 et sont réfléchis vers la moitié supérieure de la lentille 18. Ces rayons sont alors réfractés une première fois au passage du premier dioptre de la lentille et ensuite une deuxième fois au passage du deuxième dioptre. Ces rayons, s'ils n'étaient pas réfléchis vers la moitié supérieure de la lentille, rencontreraient la moitié inférieure de la lentille de telle manière qu'ils seraient réfractés vers le haut du faisceau à la sortie de la lentille. Le fait de les réfléchir au moyen de la surface réfléchissante 16 réalise une coupure essentiellement horizontale du faisceau. Ce phénomène est bien connu en soi de l'homme de métier. Ces rayons sont illustrés par les rayons représentés en trait interrompu. Un faisceau avec une image telle que représentée à la figure 2 est alors produit. On peut observer que ce faisceau présente une coupure essentiellement horizontale, la zone située au-dessus de la coupure en question étant très peu, voire pas du tout éclairée, alors que la zone située en-dessous de la dite coupure est éclairée.

Lorsque la source lumineuse 22 du deuxième système optique est alimentée électriquement, un faisceau complémentaire au faisceau du premier système optique est produit. Lorsque la source lumineuse 22 du deuxième système optique est alimentée électriquement en même temps que les zones lumineuses principales 8¹ du premier système optique, un faisceau tel que celui illustré en trait continu à la figure 3 est produit. Afin d'atteindre des valeurs photométriques voulues pour une fonction d'éclairage du type route (en anglais « high-beam »), les zones lumineuses auxiliaires 8² de la source lumineuse 8 du premier système optique 6 sont également alimentées électriquement. Le faisceau produit par le premier système optique 6 est alors plus intense d'un point de vue photométrique et permet alors de produire un faisceau d'éclairage correspondant à l'image représentée en trait interrompu à la figure 3. Ce faisceau est non seulement plus large, notamment dans sa partie inférieure, mais également plus intense que le faisceau produit avec les deux systèmes optiques 6 et 20 lorsque uniquement les zones lumineuses principales 8¹ du premier système 6 sont alimentées. L'augmentation d'intensité lumineuse est avantageusement concentrée sur la zone hachurée à la figure 3, dont la hauteur correspond à 3% de pente vers le bas à compter de l'horizontale et dont la largeur correspond à 20% de pente. Le flux lumineux moyen dans cette zone peut passer de 120 Lm à 170 Lm. L'augmentation dans cette zone est avantageusement supérieure ou égale à 50%.

En référence à la figure 1, la ou les zones lumineuses auxiliaires 8² (qui ne sont alimentées qu'en combinaison avec celle(s) du deuxième système optique 20) sont avantageusement disposées, suivant la direction de l'axe optique et le sens de parcours des rayons lumineux, à l'avant des zones lumineuses principales 8¹. Le parcours d'un rayon depuis une des zones lumineuses auxiliaires 8² est illustré en trait interrompu à la figure 1. On peut observer que le rayon émis par la zone lumineuse 8², après réflexion sur la surface réfléchissante 12, rencontre la surface réfléchissante 16 à l'arrière du bord de coupure 14 et est réfléchi vers la moitié supérieure de la lentille 18. Il rencontre la lentille 18 avec un angle d'incidence inférieur à celui du rayon correspondant, également en trait interrompu, provenant d'un des zones lumineuses principales 8¹. Le rayon provenant de la zone lumineuse auxiliaire 8², située à l'avant des zones lumineuses principales 8¹, sort de la lentille 18 suivant une direction dirigée vers le bas. Le fait de positionner la ou les zones lumineuses auxiliaires à l'avant de la ou des zones lumineuses principales, plus particulièrement à l'avant du premier foyer F₁ permet ainsi d'augmenter l'intensité lumineuse à proximité de la coupure horizontale, dans la partie inférieure du faisceau produit.

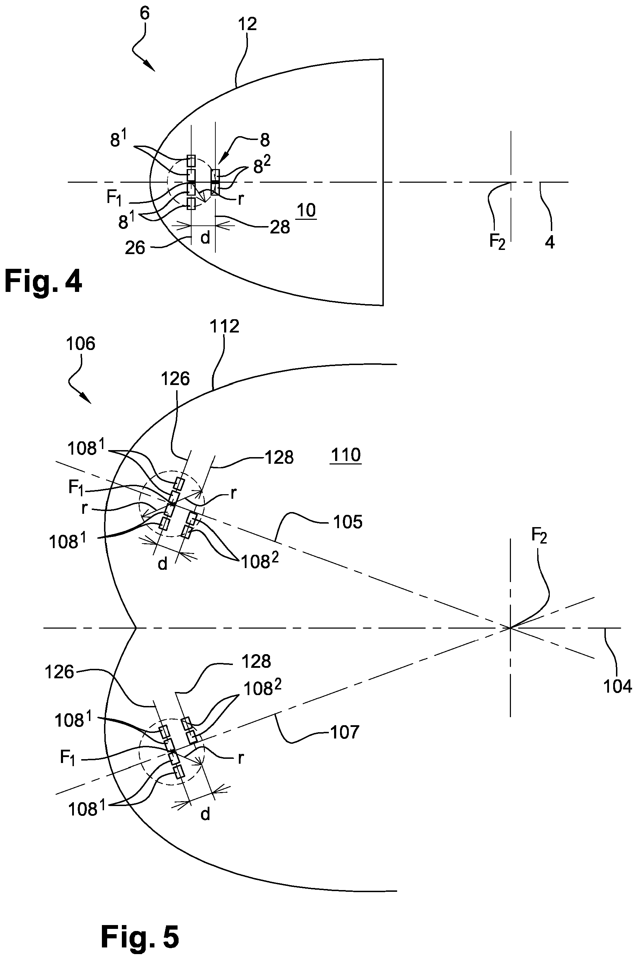

La figure 4 est une vue en élévation de la face supérieure du support 10 de la source lumineuse 8 du premier système optique 6 de la figure 1. On peut observer que la source lumineuse 8 comprend quatre zones lumineuses principales 8¹ disposées le long d'une première direction 26 perpendiculaire à l'axe optique 4. Les zones lumineuses auxiliaires 8² sont au nombre de deux et sont également disposées suivant une deuxième direction 28 perpendiculaire à l'axe optique 4, cette direction étant située à l'avant de la première direction perpendiculaire 26. La distance *d* entre ces deux directions perpendiculaires 26 et 28 peut être comprise entre 0.5 et 3 mm, préférentiellement entre 1 et 2 mm. Toujours en référence à la figure 4, on peut observer que la distance *d* en question correspond au rayon *r* d'un cercle centré sur le premier foyer F₁ et par lequel passe la deuxième direction perpendiculaire 28. Les zones lumineuses principales 8¹ sont avantageusement réparties suivant la première direction perpendiculaire 26 sur le diamètre 2r du cercle. Cette disposition est particulièrement intéressante d'un point de vue optique car les zones lumineuses principales 8¹, en étant alignées le long de la direction perpendiculaire 26 passant par le premier foyer F₁ assurent que les rayons produits se concentrent vers le bord de coupure au deuxième foyer F₂ et, partant, un faisceau homogène avec une coupure horizontale nette.

La figure 5 est une représentation similaire à celle de la figure 4 d'une configuration du premier système optique du module de la figure 1 selon un deuxième mode de réalisation de l'invention. Les numéros de référence du premier mode de réalisation selon les figures 1 à 4 sont utilisés pour les éléments identiques ou correspondants, ces numéros étant toutefois majorés de 100. Il est par ailleurs fait référence à la description de ces éléments dans le cadre du premier mode de réalisation. Des numéros de référence spécifiques, compris entre 100 et 200, sont utilisés pour les éléments spécifiques.

Le premier système optique 106 illustré à la figure 5 comprend deux sources lumineuses 108 disposées latéralement, de part et d'autre, de l'axe optique 104 du module. Ces sources lumineuses 108 sont disposées de manière à ce que leurs rayons lumineux convergent vers le deuxième foyer F₂ sur l'axe optique 104 du module. Pour ce faire, la surface réfléchissante 112 forme deux portions de surfaces en forme de demi-coquille, préférentiellement suivant un profil elliptique avec deux foyers F₁ et F₂. Les deux portions de surface sont avantageusement des portions de surface de révolution autour des axes optiques 105 et 107 du système optique 106, lesdits axes convergeant vers le deuxième foyer F₂. Chacune des deux sources lumineuses 108 est disposée au premier foyer F₁ sur l'axe optique correspondant 105 et 107. Une lentille similaire à la lentille 10 de la figure 1 est disposée à l'avant du deuxième foyer F₂, plus particulièrement de manière à ce que son foyer corresponde au foyer F₂ en question.

Similairement à la source lumineuse 8 du premier mode de réalisation, les sources lumineuses 108 comprennent, chacune, des zones lumineuses principales 108¹ et des zones lumineuses auxiliaires 108². Similairement à la configuration du premier mode illustré à la figure 5, les zones lumineuses principales 108¹ peuvent être alignées suivant une première direction 126 perpendiculaire à l'axe optique 105 ou 107 correspondant. Toujours similairement au premier mode de réalisation, les zones lumineuses auxiliaires 108² peuvent être disposées à l'avant des zones lumineuses principales 108¹, préférentiellement alignées suivant une deuxième direction 128 perpendiculaire à l'axe optique correspondant. En l'occurrence, les zones lumineuses auxiliaires 108² sont au nombre de deux et les zones lumineuses principales 108¹ sont au nombre de quatre, et ce pour chacune des deux sources lumineuses 108. Il est bien sûr entendu que ces nombres peuvent varier. Il est intéressant de noter que les zones lumineuses auxiliaires 108² sont disposées latéralement par rapport à l'axe optique 105 ou 107 correspondant, du côté de l'axe optique 104 du module. Cette configuration est intéressante en ce que ce décalage latéral des zones lumineuses auxiliaires 108² permet de concentrer les rayons horizontalement vers le centre du faisceau.

La distance d entre les deux directions perpendiculaires 126 et 128 peut être comprise entre 0.5 et 3 mm, préférentiellement entre 1 et 2 mm. On peut observer à la figure 5 que la distance *d* en question correspond au rayon rd'un cercle centré sur chacun des premiers foyers F₁ et par lequel passe la deuxième direction perpendiculaire 128. Les zones lumineuses principales 108¹ sont avantageusement réparties suivant la première direction perpendiculaire 126 sur le diamètre *2r du* cercle.

De manière générale, les zones lumineuses de la ou des sources lumineuses du premier système optique peuvent être situées sur un même composant semiconducteur, ces zones étant alors adressables d'un point de vue activation, de manière à pouvoir les alimenter de manière individuelle. Alternativement, ces zones peuvent correspondre à plusieurs composants semi-conducteurs distincts, auquel cas ces composants sont alimentés de manière individuelle, par exemple au moyen de pistes conductrices électriquement sur une platine commune à ces composants.

Toujours de manière générale, une unité de contrôle (non représentée) est avantageusement raccordée électriquement aux sources lumineuses des premier et deuxième systèmes optiques, et configurée de manière à alimenter uniquement les zones lumineuses principales de la ou des premières sources pour produire le faisceau à coupure horizontale et toutes les zones lumineuses de la ou des premières sources, ainsi que la deuxième source pour produire le faisceau sans coupure horizontale.

## Revendications

1. Module d'éclairage (2) pour véhicule automobile, comprenant :
- un axe optique (4 ; 104) ;
- un premier système optique (6 ; 106) avec au moins une première source lumineuse (8 ; 108), ledit système (6 ; 106) étant configuré pour former un premier faisceau d'éclairage suivant l'axe optique (4; 104), à coupure horizontale ;
- un deuxième système optique (20) avec au moins une deuxième source lumineuse (22), ledit système (20) étant configuré pour produire, en combinaison avec le premier système optique (6; 106), un deuxième faisceau d'éclairage suivant l'axe optique (4; 104), verticalement plus étendu que le premier faisceau ;
l'au moins une première source lumineuse (8 ; 108) présentant une puissance d'éclairage variable entre un niveau haut et un niveau bas, le premier faisceau étant réalisé au niveau bas de puissance d'éclairage et le deuxième faisceau étant réalisé au niveau haut,
l'au moins une première source lumineuse(8 ; 108) comprenant au moins une zone lumineuse principale (8¹ ; 108¹) et au moins une zone lumineuse auxiliaire (8² ; 108²), lesdites au moins une zone principale (8¹ ; 108¹) et auxiliaire (8² ; 108²) étant aptes à être alimentées électriquement séparément, le niveau bas de puissance d'éclairage étant réalisé par l'alimentation de l'au moins une zone principale (8¹ ; 108¹) uniquement et le niveau haut de puissance étant réalisé par l'alimentation de l'au moins une zone principale (8¹ ; 108¹) et l'au moins une zone auxiliaire (8² ; 108²),
l'au moins une zone lumineuse auxiliaire (8² ; 108²) de l'au moins une première source lumineuse (8 ; 108) étant disposée, suivant l'axe optique (4 ; 104), à l'avant de l'au moins une zone lumineuse principale (8¹ ; 108¹).

2. Module d'éclairage (2) selon la revendication 1, **caractérisé en ce que** l'au moins une zone lumineuse principale (8¹ ; 108¹) et l'au moins une zone lumineuse auxiliaire (8² ; 108²) de l'au moins une première source lumineuse (8 ; 108) sont disposées sur un même composant.

3. Module d'éclairage (2) selon l'une des revendications 1 ou 2, **caractérisé en ce que** le niveau haut de puissance d'éclairage est supérieur ou égal à 150% du niveau bas.

4. Module d'éclairage (2) selon l'une des revendications 1 à 3, **caractérisé en ce que** le deuxième faisceau présente un flux lumineux moyen dans une zone, qui est supérieur ou égal à 150% du flux lumineux moyen du premier faisceau dans la zone, ladite zone étant située sous l'axe optique.

5. Module d'éclairage (2) selon l'une des revendications 1 à 4, **caractérisé en ce que** l'au moins une première source lumineuse (8; 108) est disposée de manière à éclairer dans une première direction, l'au moins une deuxième source lumineuse (22) étant disposée de manière à éclairer dans une deuxième direction opposée à la première direction.

6. Module d'éclairage (2) selon l'une des revendications 1 à 5, **caractérisé en ce que** chacun du premier et deuxième système optique (6, 106 ; 20) comprend une surface réfléchissante (12, 112 ; 24) apte à réfléchir les rayons émis par l'au moins une première et/ou deuxième source lumineuse (8; 108; 22), respectivement, vers un bord de coupure (14) situé sur l'axe optique (4 ; 104) du module.

7. Module d'éclairage (2) selon la revendication 6, **caractérisé en ce que** la surface réfléchissante (12, 112 ; 24) du premier et/ou du deuxième système optique (6, 106 ; 20) présente une forme de demi-coquille, préférentiellement avec un profil elliptique.

8. Module d'éclairage (2) selon l'une des revendications 1 à 7, **caractérisé en ce qu'**il comprend une unité électronique de contrôle de l'au moins une première et l'au moins une deuxième source lumineuse (8, 108 ; 22), configurée pour alimenter l'au moins une première source lumineuse (8, 108) selon le niveau bas pour former le premier faisceau et pour alimenter l'au moins une première source lumineuse (8 ; 108) selon le niveau haut et l'au moins une deuxième source lumineuse (22) pour former le deuxième faisceau.

9. Module d'éclairage (2) selon l'une des revendications 1 à 8, **caractérisé en ce que** les premières sources lumineuses (108) sont au nombre de deux, disposées de part et d'autre, respectivement, de l'axe optique (104) du module.

10. Module d'éclairage (2) selon les revendications 6 et 9, **caractérisé en ce que** la surface réfléchissante (112) du premier système optique (106) comprend deux portions de surface de révolution suivant deux axes optiques (105, 107) dudit système optique (106), lesdits axes (105, 107) convergeant vers l'axe optique (104) du module.

11. Module d'éclairage (2) selon les revendications 1 et 10, **caractérisé en ce que** l'au moins une zone lumineuse principale (108¹) de chacune des deux premières sources lumineuses (108) est centrée sur un des deux axes optiques (105, 107) du premier système optique (106), respectivement, et l'au moins une zone lumineuse auxiliaire (108²) est disposée latéralement audit axe optique (105, 107) correspondant, du côté de l'axe optique (104) du module, et à l'avant de l'au moins une zone lumineuse principale (108¹).

12. Module d'éclairage (2) selon la revendication 11, **caractérisé en ce que** les zones lumineuses principales (108¹) de chacune des deux premières sources lumineuses (108) sont alignées suivant une première direction (126) perpendiculaire à l'axe optique correspondant (105, 107) du premier système optique (106).

13. Module d'éclairage (2) selon la revendication 12, **caractérisé en ce que** les zones lumineuses auxiliaires (108²) de chacune des deux premières sources lumineuses (108) sont alignées suivant une deuxième direction (128) perpendiculaire à l'axe optique correspondant (105, 107) du premier système optique (106), ladite deuxième direction (128) étant située à l'avant de la première direction perpendiculaire correspondante (126).

14. Module d'éclairage (2) selon l'une des revendications 1 à 13, **caractérisé en ce qu'**il comprend une lentille (18) configurée pour recevoir des rayons lumineux des premier et deuxième systèmes optiques (6, 106 ; 20) en vue former les premier et deuxième faisceaux.

## Patentansprüche

1. Beleuchtungsmodul (2) für ein Kraftfahrzeug, das Folgendes beinhaltet:
- eine optische Achse(4; 104);
- ein erstes optisches System (6; 106) mit mindestens einer ersten Lichtquelle (8; 108), wobei das System (6; 106) dazu konfiguriert ist, ein erstes Beleuchtungsbündel entlang der optischen Achse (4; 104) mit einer horizontalen Abgrenzung zu bilden;
- ein zweites optisches System (20) mit mindestens einer zweiten Lichtquelle (22), wobei das System (20) dazu konfiguriert ist, zusammen mit dem ersten optischen System (6; 106) ein zweites Beleuchtungsbündel entlang der optischen Achse (4; 104) zu produzieren, das sich vertikal weiter als das erste Bündel erstreckt;
wobei die mindestens eine erste Lichtquelle (8; 108) eine variable Beleuchtungsstärke zwischen einem hohen Pegel und einem niedrigen Pegel aufweist, wobei das erste Bündel mit dem niedrigen Beleuchtungsstärkepegel erzeugt wird und das zweite Bündel mit dem hohen Pegel erzeugt wird,
wobei die mindestens eine erste Lichtquelle (8; 108) mindestens eine Hauptlichtzone (8¹; 108¹) und mindestens eine Nebenlichtzone (8²; 108²) beinhaltet, wobei die mindestens eine Hauptlichtzone (8¹; 108¹) und die mindestens eine Nebenlichtzone (8²; 108²) dazu fähig sind, separat mit Strom versorgt zu werden, wobei der niedrige Beleuchtungsstärkepegel erzeugt wird, indem nur die mindestens eine Hauptzone (8¹; 108¹) mit Strom versorgt wird, und der hohe Stärkepegel erzeugt wird, indem die mindestens eine Hauptzone (8¹; 108¹) und die mindestens eine Nebenzone (8²; 108²) mit Strom versorgt werden, wobei die mindestens eine Nebenlichtzone (8²; 108²) der mindestens einen ersten Lichtquelle (8; 108) entlang der optischen Achse (4; 104) vor der mindestens einen Hauptlichtzone (8¹; 108¹) angeordnet ist.

2. Beleuchtungsmodul (2) nach Anspruch 1, **dadurch gekennzeichnet, dass** die mindestens eine Hauptlichtzone (8¹; 108¹) und die mindestens eine Nebenlichtzone (8²; 108²) der mindestens einen ersten Lichtquelle (8; 108) auf einer gleichen Komponente angeordnet sind.

3. Beleuchtungsmodul (2) nach einem der Ansprüche 1 oder 2, **dadurch gekennzeichnet, dass** der hohe Beleuchtungsstärkepegel 150 % des niedrigen Pegels oder mehr beträgt.

4. Beleuchtungsmodul (2) nach einem der Ansprüche 1 bis 3, **dadurch gekennzeichnet, dass** das zweite Bündel in einer Zone einen mittleren Lichtstrom, der 150 % des mittleren Lichtstroms des ersten Bündels in der Zone oder mehr beträgt, aufweist, wobei sich die Zone unterhalb der optischen Achse befindet.

5. Beleuchtungsmodul (2) nach einem der Ansprüche 1 bis 4, **dadurch gekennzeichnet, dass** die mindestens eine erste Lichtquelle (8; 108) so angeordnet ist, dass sie eine Beleuchtung in einer ersten Richtung bereitstellt, die mindestens eine zweite Lichtquelle (22) so angeordnet ist, dass sie eine Beleuchtung in einer zweiten Richtung, die zu der ersten Richtung entgegengesetzt ist, bereitstellt.

6. Beleuchtungsmodul (2) nach einem der Ansprüche 1 bis 5, **dadurch gekennzeichnet, dass** jedes von dem ersten und dem zweiten optischen System (6, 106; 20) eine reflektierende Oberfläche (12, 112; 24) beinhaltet, die dazu fähig ist, die jeweils von der mindestens einen ersten und/oder zweiten Lichtquelle (8; 108; 22) emittierten Strahlen zu einer Abgrenzungskante (14), die sich auf der optischen Achse (4; 104) des Moduls befindet, zu reflektieren.

7. Beleuchtungsmodul (2) nach Anspruch 6, **dadurch gekennzeichnet, dass** die reflektierende Oberfläche (12, 112; 24) des ersten und/oder des zweiten optischen Systems (6, 106; 20) eine Halbschalenform, vorzugsweise mit einem elliptischen Profil, aufweist.

8. Beleuchtungsmodul (2) nach einem der Ansprüche 1 bis 7, **dadurch gekennzeichnet, dass** es eine elektronische Einheit zur Steuerung der mindestens einen ersten und der mindestens einen zweiten Lichtquelle (8, 108; 22) beinhaltet, die dazu konfiguriert ist, die mindestens eine erste Lichtquelle (8, 108) entsprechend dem niedrigen Pegel mit Strom zu versorgen, um das erste Bündel zu bilden, und die mindestens eine erste Lichtquelle (8; 108) entsprechend dem hohen Pegel und die mindestens eine zweite Lichtquelle (22) mit Strom zu versorgen, um das zweite Bündel zu bilden.

9. Beleuchtungsmodul (2) nach einem der Ansprüche 1 bis 8, **dadurch gekennzeichnet, dass** die Anzahl der ersten Lichtquellen (108) zwei beträgt, die jeweils auf beiden Seiten der optischen Achse (104) des Moduls angeordnet sind.

10. Beleuchtungsmodul (2) nach den Ansprüchen 6 und 9, **dadurch gekennzeichnet, dass** die reflektierende Oberfläche (112) des ersten optischen Systems (106) zwei Rotationsflächenabschnitte entlang zwei optischen Achsen (105, 107) des optischen Systems (106) beinhaltet, wobei die Achsen (105, 107) zu der optischen Achse (104) des Moduls hin konvergieren.

11. Beleuchtungsmodul (2) nach den Ansprüchen 1 und 10, **dadurch gekennzeichnet, dass** die mindestens eine Hauptlichtzone (108¹) jeder der zwei ersten Lichtquellen (108) auf jeweils eine der zwei optischen Achsen (105, 107) des ersten optischen Systems (106) zentriert ist und die mindestens eine Nebenlichtzone (108²) seitlich zu der entsprechenden optischen Achse (105, 107), auf der Seite der optischen Achse (104) des Moduls, und vor der der mindestens einen Hauptlichtzone (108¹) angeordnet ist.

12. Beleuchtungsmodul (2) nach Anspruch 11, **dadurch gekennzeichnet, dass** die Hauptlichtzonen (108¹) jeder der zwei ersten Lichtquellen (108) entlang einer ersten Richtung (126) ausgerichtet sind, die zu der entsprechenden optischen Achse (105, 107) des ersten optischen Systems (106) senkrecht ist.

13. Beleuchtungsmodul (2) nach Anspruch 12, **dadurch gekennzeichnet, dass** die Nebenlichtzonen (108²) jeder der zwei ersten Lichtquellen (108) entlang einer zweiten Richtung (128) ausgerichtet sind, die zu der entsprechenden optischen Achse (105, 107) des ersten optischen Systems (106) senkrecht ist, wobei sich die zweite Richtung (128) vor der entsprechenden senkrechten ersten Richtung (126) befindet.

14. Beleuchtungsmodul (2) nach einem der Ansprüche 1 bis 13, **dadurch gekennzeichnet, dass** es eine Linse (18) beinhaltet, die dazu konfiguriert ist, Lichtstrahlen des ersten und des zweiten optischen Systems (6, 106; 20) zu empfangen, um das erste und das zweite Bündel zu bilden.

## Claims

1. Motor vehicle lighting module (2), comprising:
- an optical axis (4; 104);
- a first optical system (6; 106) with at least one first light source (8; 108), said system (6; 106) being configured to form a first lighting beam along the optical axis (4, 104), with a horizontal cutoff;
- a second optical system (20) with at least one second light source (22), said system (20) being configured to produce, in combination with the first optical system (6; 106), a second lighting beam along the optical axis (4; 104), that is vertically more extensive than the first beam;
the at least one first light source (8; 108) having a variable lighting power varying between a high level and a low level, the first beam being produced at the low level of lighting power and the second beam being produced at the high level;
the at least one first light sources (8; 108) comprising at least one main light zone (8¹; 108¹) and at least one auxiliary light zone (8²; 108²), said at least one main (8¹; 108¹) and auxiliary (8²; 108²) zones being able to be electrically powered separately, the low level of lighting power being produced by powering the at least one main light zone (8¹; 108¹) only and the high level of power being produced by powering the at least one main light zone (8¹; 108¹) and the at least one auxiliary light zone (8²; 108²);
at least one auxiliary light zone (8²; 108²) of the at least one first light source (8; 108) being arranged, along the optical axis (4; 104), forward of the at least one main light zone (8¹; 108¹).

2. Lighting module (2) according to claim 1, **characterized in that** the at least one main light zone (8¹; 108¹) and the at least one main auxiliary light zone (8²; 108²) of the at least one first light sources (8; 108) are arranged on one and the same component.

3. Lighting module (2) according to one of claims 1 or 2, **characterized in that** the high level of lighting power is greater than or equal to 150% of the low level.

4. Lighting module (2) according to one of claims 1 to 3, **characterized in that** the second beam has a mean light flux in a zone which is greater than or equal to 150% of the mean light flux of the first beam in the zone, said zone being situated beneath the optical axis.

5. Lighting module (2) according to one of claims 1 to 4, **characterized in that** the at least one first light source (8; 108) is arranged in such a way as to illuminate in a first direction, the at least one second light source (22) being arranged in such a way as to illuminate in a second direction which is the opposite of the first direction.

6. Lighting module (2) according to one of claims 1 to 5, **characterized in that** each of the first and second optical systems (6, 106; 20) comprises a reflective surface (12, 112; 24) able to reflect the rays emitted by the at least one first and/or second light source (8; 108; 22), respectively, toward a cutoff edge (14) situated on the optical axis (4; 104) of the module.

7. Lighting module (2) according to claim 6, **characterized in that** the reflective surface (12, 112; 24) of the first and/or of the second optical system (6, 106; 20) has the shape of a half-shell, preferably with an elliptical profile.

8. Lighting module (2) according to one of claims 1 to 7, **characterized in that** it comprises an electronic control unit controlling the at least one first and the at least one second light source (8, 108; 22), and configured to power the at least one first light source (8, 108) at the low level to form the first beam and to power the at least one first light source (8; 108) at the high level and the at least one second light source (22) to form the second beam.

9. Lighting module (2) according to one of claims 1 to 8, **characterized in that** the first light sources (108) are two in number, arranged respectively one on each side of the optical axis (104) of the module.

10. Lighting module (2) according to claims 6 and 9, **characterized in that** the reflective surface (112) of the first optical system (106) comprises two portions of a surface of revolution about two optical axes (105, 107) of said optical system (106), said axes (105, 107) converging toward the optical axis (104) of the module.

11. Lighting module (2) according to claims 1 and 10, **characterized in that** the at least one main light zone (108¹) of each of the two first light sources (108) is centered on one of the two optical axes (105, 107) of the first optical system (106) respectively, and the at least one auxiliary light zone (108²) is arranged laterally to said corresponding optical axis (105, 107) on the side of the optical axis (104) of the module and forward of the at least one main light zone (108¹).

12. Lighting module (2) according to claim 11, **characterized in that** the main light zones (108¹) of each of the two first light sources (108) are aligned in a first direction (126) perpendicular to the corresponding optical axis (105, 107) of the first optical system (106).

13. Lighting module (2) according to claim 12, **characterized in that** the auxiliary light zones (108²) of each of the two first light sources (108) are aligned in a second direction (128) perpendicular to the corresponding optical axis (105, 107) of the first optical system (106), said second direction (128) being situated forward of the corresponding first perpendicular direction (126).

14. Lighting module (2) according to one of claims 1 to 13, **characterized in that** it comprises a lens (18) configured to receive rays of light from the first and second optical systems (6, 106; 20) in order to form the first and second beams.
